# EUROPEAN PATENT SPECIFICATION

(11) **EP 2 743 098 B1**
(45) Date of publication and mention of the grant of the patent: **27.03.2019**
(21) Application number: 13189506.2
(22) Date of filing: 21.10.2013
(51) Int. Cl.: B60C 9/20, B60C 15/06

(54) **PNEUMATIC TIRE**
LUFTREIFEN
PNEU

(30) Priority: 11.12.2012 JP 2012270611
(43) Date of publication of application: 18.06.2014
(73) Proprietor: SUMITOMO RUBBER INDUSTRIES LIMITED, Kobe-shi, Hyogo-ken (JP)
(72) Inventor: Matsumoto, Tadao, Kobe-shi, Hyogo-ken, 651-0072 (JP)
(74) Representative: Manitz Finsterwald Patent- und Rechtsanwaltspartnerschaft mbB

(56) References cited:
- JP-A- H1 134 619
- JP-A- 2006 076 361
- JP-A- 2006 117 078
- JP-A- 2007 084 013
- JP-A- 2009 001 072
- JP-B2- 4 473 386
- US-A- 4 387 759

## Description

### BACKGROUND OF THE INVENTION

### Field of the Invention

The present invention relates to a pneumatic tire having improved pinch cut resistance and handling stability in a balanced manner while the weight thereof is reduced.

### Description of the Background Art

In recent years, weight reduction of pneumatic tires has been required in order to improve the fuel consumption of vehicles. Weight reduction of a pneumatic tire is achieved by decreasing (thinning) the thickness of a rubber material constituting mainly an outer surface portion of the tire. The thinned location includes a buttress portion between a tread portion and each sidewall portion.

However, in the pneumatic tire thinned as described above, when the tire is in contact with the ground due to its rolling, interval widening, that is, increasing of the intervals between the carcass cords at the buttress portion occurs, and the rigidity is decreased. Thus, there is a problem that, for example, due to great bending deformation caused such as when the tire runs on a protruding object such as a curbstone, a pitch cut occurs that the carcass cords at this portion are fractured. In addition, the pneumatic tire having low rigidity at the buttress portion also has a problem that the handling stability is deteriorated.

As related art, there is Japanese Laid-Open Patent Publication No. 2008-1138.

In addition, JP 4 473386 B2, which discloses the features of the preamble of claim 1, discloses a pneumatic tire which comprises a carcass extending from a tread portion through sidewall portions to bead cores in bead portions, a belt layer disposed outward of the carcass in a tire radial direction and inward of the tread portion, and clinch rubbers which are disposed in the bead portions and outward of the carcass in a tire axial direction and which are forming outer surfaces of the bead portions. The belt layer is composed of a plurality of belt plies having belt cords tilted at an angle of 10° to 45° with respect to a tire equator. At respective buttress portions on both sides, a pair of buttress reinforcing layers is disposed between the carcass and the belt layer.

Furthermore, JP 2009 001072 A discloses a pneumatic tire having a carcass extending from a tread portion through sidewall portions to bead cores in bead portions, a belt layer disposed outward of the carcass in a tire radial direction and inward of the tread portion, and clinch rubbers which are disposed in the bead portions and outward of the carcass in a tire axial direction and which are forming outer surfaces of the bead portions.

JP H11 34619 A discloses a similar pneumatic tire.

### SUMMARY OF THE INVENTION

The present invention has been conceived of in view of the above situation, and a main object of the present invention is to provide a pneumatic tire in which, basically, a reinforcing layer is provided at each buttress portion and the thickness of each clinch rubber is defined within a certain range and which has improved pinch cut resistance and handling stability in a balanced manner while the weight thereof is reduced.

According to a first aspect of the present invention, a pneumatic tire comprising: a carcass extending from a tread portion through sidewall portions to bead cores in bead portions; a belt layer disposed outward of the carcass in a tire radial direction and inward of the tread portion; and clinch rubbers disposed in the bead portions and outward of the carcass in a tire axial direction and forming outer surfaces of the bead portions. The belt layer is composed of a plurality of belt plies having belt cords tilted at an angle of 15° to 45° with respect to a tire equator. At respective buttress portions on both sides, a pair of buttress reinforcing layers are disposed between the carcass and the belt layer. A thickness of each clinch rubber at a location which is at a height of 25 mm from a bead base line outwardly in the tire radial direction is 3 to 5 mm.

According to a second aspect of the present invention, in the pneumatic tire according to the first aspect, the pair of buttress reinforcing layers have reinforcing cords tilted in a direction opposite to that of a belt cord of an innermost belt ply.

According to a third aspect of the present invention, in the pneumatic tire according to the first or second aspect, the reinforcing cords of the buttress reinforcing layers are tilted at an angle of 40° to 60° with respect to a tire circumferential direction.

According to a fourth aspect of the present invention, in the pneumatic tire according to any one of the first to third aspects, bead apex rubbers having a substantially triangular cross-sectional shape are provided so as to extend from the bead cores outwardly in the tire radial direction, and a rubber hardness of each clinch rubber is the same as a rubber hardness of each bead apex rubber.

The pneumatic tire according to the present invention includes: a carcass extending from a tread portion through sidewall portions to bead cores in bead portions; a belt layer disposed outward of the carcass in a tire radial direction and inward of the tread portion; a pair of buttress reinforcing layers disposed between the carcass and the belt layer at respective buttress portions on both sides; and clinch rubbers disposed in the bead portions and outward of the carcass in a tire axial direction and forming outer surfaces of the bead portions.

The belt layer is composed of a plurality of belt plies having belt cords tilted at an angle of 15° to 45° with respect to a tire equator. Such belt plies tighten the carcass, increase the rigidity of the tread portions, and improve the handling stability. In addition, the pair of buttress reinforcing layers are able to further firmly tighten the carcass. Therefore, the rigidity of the buttress portions is increased, and the handling stability is further improved.

Each clinch rubber is thinned so as to have a thickness of 3 to 5 mm at a location which is at a height of 25 mm from the bead base line outwardly in the tire radial direction. By so doing, the weight of the tire is reduced. In addition, since such clinch rubbers have small thicknesses, carcass cords at each bead portion are located at a neutral axis of bending deformation, and tensile stress applied to the carcass cords is decreased. Therefore, the pinch cut resistance of the carcass cords is improved.

### BRIEF DESCRIPTION OF THE DRAWINGS

FIG. 1 is a cross-sectional view of the right half of a pneumatic tire showing one embodiment of the present invention;
FIG. 2 is an enlarged view of a buttress portion in FIG. 1;
FIG. 3 is a partial perspective view of the pneumatic tire in FIG. 1;
FIG. 4 is a development of the tire, showing a carcass ply, belt plies, and buttress reinforcing layers;
FIG. 5(a) is a partial cross-sectional view representing the advantageous effect of the present invention;
FIG. 5(b) is an enlarged view of a bead portion in FIG. 5(a);
FIG. 6 is a plan view explaining a test method for pinch cut resistance; and

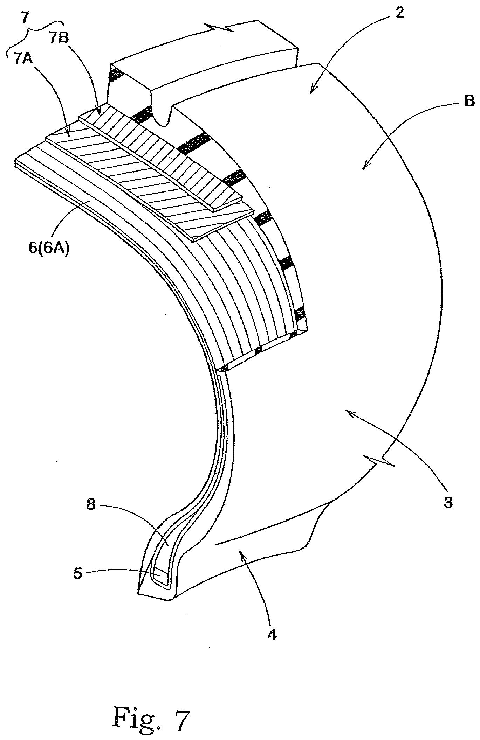

FIG. 7 is a partial perspective view showing a pneumatic tire of a conventional example.

### DESCRIPTION OF THE PREFERRED EMBODIMENTS

Hereinafter, one embodiment of the present invention will be described with reference to the drawings.

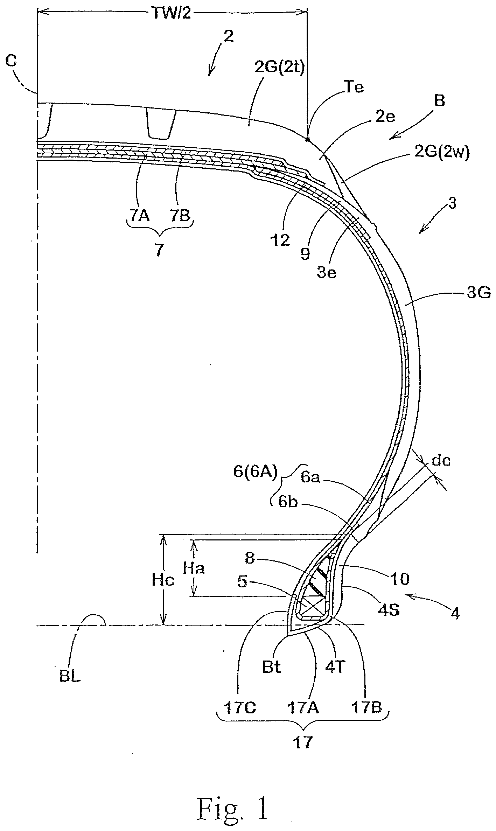

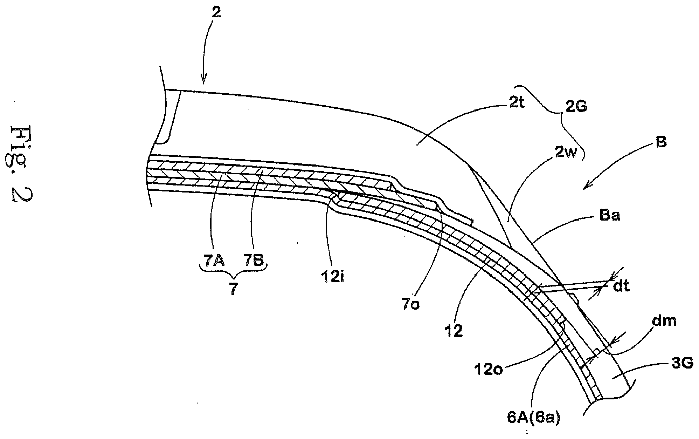

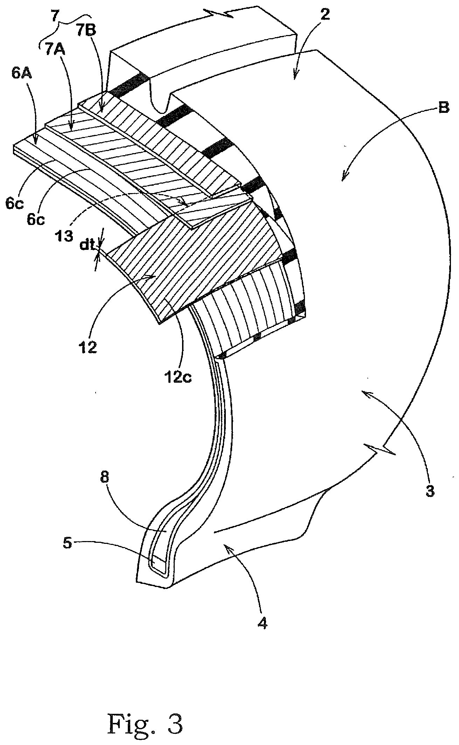

FIG. 1 is a tire meridian cross-sectional view of a pneumatic tire according to the present embodiment (hereinafter, sometimes referred to merely as "tire") in a normal condition, FIG. 2 is an enlarged view of a buttress portion B of the pneumatic tire, and FIG. 3 is a partial perspective view of the tire in FIG. 1. In the present specification, the "normal condition" refers to a condition where the tire is mounted on a normal rim (not shown) and inflated to a normal internal pressure and no load is applied to the tire, and the dimension or the like of each portion of the tire is a value measured in the normal condition unless otherwise specified.

The "normal rim" is a rim specified for every tire by each standard in a standardizing system including standards on which tires are based, and is a "standard rim" in the JATMA standard, a "Design Rim" in the TRA standard, and a "Measuring Rim" in the ETRTO standard. In addition, the "normal internal pressure" is an air pressure specified for every tire by each standard in the standardizing system including the standards on which tires are based, and is a "maximum air pressure" in the JATMA standard, a maximum value recited in the table of "TIRE LOAD LIMITS AT VARIOUS COLD INFLATION PRESSURES" in the TRA standard, and an "INFLATION PRESSURE" in the ETRTO standard.

As shown in FIGS. 1 to 3, the tire according to the present embodiment has a so-called TOS structure, and a tread rubber 2G forming the tire surface at a tread portion 2 includes an overlap portion 9 where each outer edge portion 2e, in a tire axial direction, of the tread rubber 2G covers and overlaps an outer edge portion 3e, in a tire radial direction, of a sidewall rubber 3G forming the tire surface at each sidewall portion 3. The tread rubber 2G according to the present embodiment includes a main tread rubber portion 2t which comes into contact with a road surface, and wing rubber portions 2w which are disposed at both ends of the main tread rubber portion 2t and have a triangular cross-sectional shape.

The tire according to the present embodiment has an aspect ratio of 50% to 70% and is for passenger car. The tire includes a carcass 6 extending from the tread portion 2 through the sidewall portions 3 on both sides to bead cores 5 in bead portions 4, and a belt layer 7 disposed outward of the carcass 6 in the tire radial direction and inward of the tread portion 2.

The carcass 6 is formed of one carcass ply 6A in which a body portion 6a extends between a pair of the bead cores 5 in a toroidal shape and turned-up portions 6b are connected to both sides of the main portion 6a and turned up around the bead cores 5 from the axial inside to the axial outside of the tire.

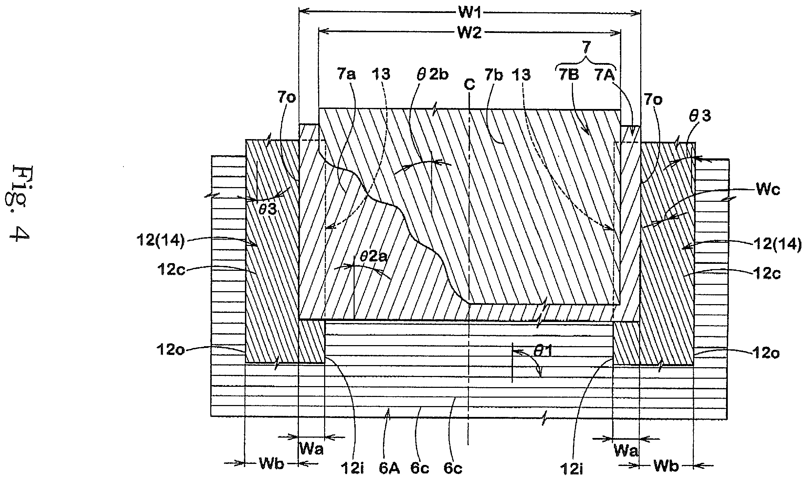

FIG. 4 is a development of the tire, including the carcass ply 6A. As shown in FIG. 4, in the carcass ply 6A, carcass cords 6c are tilted, for example, at an angle θ1 of 75° to 95°, at 90° in the present embodiment, with respect to the direction of a tire equator C. For example, organic fiber cords or steel cords are used as the carcass cords 6c. In the present embodiment, since the carcass ply is defined as a single ply, an increase in the weight of the tire is suppressed.

The belt layer 7 is composed of a plurality of belt plies. In the present embodiment, the belt layer 7 is composed of two belt plies, namely, a first belt ply 7A disposed outward of the carcass ply 6A in the tire radial direction and at an innermost position in the tire radial direction among the belt plies and a second belt ply 7B disposed outward of the first belt ply 7A in the tire radial direction.

The belt plies 7A and 7B have highly elastic belt cords 7a and 7b tilted within the ranges of angles θ2a and θ2b of 15° to 45°, respectively, with respect to the tire equator C. Such belt plies 7A and 7B tighten the carcass 6, increase the rigidity of the tread portion 2, and improves the handling stability. In the present embodiment, the belt plies 7A and 7B are positioned one on top of the other so as to be oriented in such directions, respectively, that the belt cords 7a and 7b intersect each other. Thus, a further tightening effect is exerted.

As shown in FIG. 1, the belt plies 7A and 7B according to the present embodiment are positioned one on top of the other such that the width centers thereof are located on the tire equator C, and continuously extend from a buttress portion B on one side in the tire axial direction to a buttress portion (not shown) on another side in the tire axial direction. Thus, a rigidity step in the tread portion 2 is reduced, and the tightening effect of the belt plies 7A and 7B is exerted greatly on substantially the entirety of the tread portion 2. From such a standpoint, as shown in FIG. 4, each of the widths W1 and W2 of the first belt ply 7A and the second belt ply 7B in the tire axial direction is preferably set so as to be 95% to 105% of a ground-contact width TW (shown in FIG. 1) which is the distance in the tire axial direction between ground-contact edges Te. It should be noted that in the present embodiment, the width W1 of the first belt ply 7A is larger than the width W2 of the second belt ply 7B. However, the present invention is not limited to such a mode.

The "ground-contact edges" Te are defined as outermost ground-contact positions, in the tire axial direction, on a ground-contact surface of the tire that is in the normal condition and brought into contact with a flat surface at a camber angle of 0° with a normal load applied thereto.

In addition, the "normal load" is a load specified for every tire by each standard in the standardizing system including the standards on which tires are based, and is a "maximum load capacity" in the JATMA standard, a maximum value recited in "TIRE LOAD LIMITS AT VARIOUS COLD INFLATION PRESSURES" in the TRA standard, and a "LOAD CAPACITY" in the ETRTO standard.. In the case where the tire is for passenger car, the "normal load" is a load corresponding to 88% of the above load.

In addition, as shown in FIGS. 1 to 3, in the tire according to the present embodiment, a pair of buttress reinforcing layers 12 are provided at the respective buttress portions B on both sides and disposed between the carcass 6 and the belt layer 7. Such a pair of buttress reinforcing layers 12 are able to further firmly tighten the carcass 6. Therefore, the rigidity of the buttress portions B is increased, and the handling stability is further improved. Moreover, such a tire having high rigidity at the buttress portions B is able to suppress a pinch cut, for example, even when running on a protruding object such as a curbstone.

The buttress reinforcing layers 12 according to the present embodiment have reinforcing cords 12c formed from, for example, polyester, nylon, rayon, aramid, or the like.

As shown in FIG. 4, in the present embodiment, the reinforcing cords 12c of the buttress reinforcing layers 12 are tilted in a direction opposite to that of the belt cords 7a of the first belt ply 7A. In other words, the reinforcing cords 12c are laminated so as to be oriented in such a direction that the reinforcing cords 12c and the belt cords 7a intersect each other. By so doing, the rigidity of the buttress portions B is further increased, and thus the handling stability is improved.

In each of a case where an angle θ3 of each reinforcing cord 12c of the buttress reinforcing layers 12 with respect to a tire circumferential direction is large and a case where the angle θ3 is small, the angle formed between each belt cord 7a of the first belt ply 7A and each reinforcing cord 12c is excessively decreased, and it is impossible to suppress interval widening of the carcass ply 6A. Thus, the angle θ3 is preferably not less than 40° and more preferably not less than 45°, and is preferably not greater than 60° and more preferably not greater than 55°.

In the case where the cord interval Wc between each reinforcing cord 12c of each buttress reinforcing layer 12 is large, it is impossible to sufficiently increase the cord density of each buttress portion B, and there is a concern that it is impossible to increase the handling stability. On the other hand, when the cord interval Wc is small, the adjacent reinforcing cords 12c are in contact with each other, and there is a concern that the durability of each buttress reinforcing layer 12 is decreased. In addition, the rigidity of each buttress portion B is excessively increased, and there is a concern that the ride comfort is deteriorated. From such a standpoint, the cord interval Wc between each reinforcing cord 12c is preferably not less than 0.4 mm and more preferably not less than 0.7 mm, and is preferably not greater than 2.0 mm and more preferably not greater than 1.7 mm. It should be noted that in the present specification, the cord interval Wc is a minimum interval between the reinforcing cords 12c.

Each buttress reinforcing layer 12 according to the present embodiment extends between an inner edge 12i located inward, in the tire axial direction, of an outer edge 7o, in the tire axial direction, of the belt layer 7 and an outer edge 12o located outward, in the tire axial direction, of the outer edge 7o of the belt layer 7. By so doing, an overlap portion 13 where the belt layer 7 and each buttress reinforcing layer 12 overlap each other in the tire radial direction, and a non-overlap portion 14 where the belt layer 7 and each buttress reinforcing layer 12 do not overlap each other, are formed. Such an overlap portion 13 further suppresses formation of a rigidity step in each buttress portion B and further improves the handling stability.

In the case where the width Wa of each overlap portion 13 in the tire axial direction is large, there is a concern that the weight of the tire is increased. In the case where the width Wa of each overlap portion 13 is small, there is a concern that a rigidity step is formed and the handling stability is deteriorated. Thus, the width Wa of each overlap portion 13 is preferably not less than 5 mm and more preferably not less than 7 mm, and is preferably not greater than 15 mm and more preferably not greater than 13 mm.

Similarly, in the case where the width Wb of each non-overlap portion 14 in the tire axial direction is large, there is a concern that the weight of the tire is increased. In the case where the width Wb of each non-overlap portion 14 is small, the rigidity of each buttress portion B is decreased, and there is a concern that the handling stability is deteriorated. Thus, the width Wb of each non-overlap portion 14 is preferably not less than 15 mm and more preferably not less than 12 mm, and is preferably not greater than 40 mm and more preferably not greater than 35 mm.

As shown in FIG. 2, the thickness dt of each buttress reinforcing layer 12 is not particularly limited, but in order to effectively exert the above-described advantageous effects, the thickness dt is preferably not less than 0.5 mm and preferably not greater than 1.2 mm.

In such a pneumatic tire having high rigidity at each buttress portion B, it is possible to reduce the weight of the tire by decreasing the minimum thickness dm of a rubber (formed of the wing rubber portion 2w or the sidewall rubber 3G) from the outer surface of each buttress reinforcing layer 12 to the outer surface Ba of each buttress portion B. It should be noted that if the minimum thickness dm of the rubber is excessively decreased, the rigidity of each buttress portion B is excessively decreased, and there is a concern that a pinch cut occurs. Thus, the minimum thickness dm is preferably not less than 4.0 mm and more preferably not less than 4.5 mm, and is preferably not greater than 6.5 mm and more preferably not greater than 6.0 mm. It should be noted that in the present specification, the minimum thickness dm is a distance in a normal direction of the buttress reinforcing layer 12.

In addition, as shown in FIG. 1, the tire according to the present embodiment further includes bead apex rubbers 8 which extend from the bead cores 5 outwardly in the tire radial direction and have a substantially triangular cross-sectional shape, clinch rubbers 10 which are disposed in the bead portions 4 and outward of the carcass 6 in the tire axial direction and form outer surfaces 4S of the bead portions 4, and chafer rubbers 17 which extend around the bead cores 5 in a substantially U shape in a cross section.

The bead apex rubbers 8 extend from the bead cores 5 in a tapered manner. The bead apex rubbers 8 according to the present embodiment are disposed between the body portion 6a and the turned-up portions 6b of the carcass 6.

In order to ensure the rigidity of each bead portion 4 and weight reduction of the tire in a balanced manner, the height Ha of each bead apex rubber 8 in the tire radial direction is preferably not less than 7 mm and more preferably not less than 9 mm, and is preferably not greater than 20 mm and more preferably not greater than 18 mm.

A rubber hardness of each of such bead apex rubbers 8 is preferably set so as to be 80° to 95°, in order to increase the rigidity of each bead portion 4 and ensure a desired fitting force to a rim. It should be noted that in the present specification, the "rubber hardness" is measured with a JIS type A durometer in the environment at 23°C according to JIS-K6253.

In the present embodiment, each chafer rubber 17 includes a base portion 17A which is located inward of the bead core 5 in the radial direction and exposed in a bead bottom surface 4T, an outer standing portion 17B which is connected to the base portion 17A and extends outwardly in the tire radial direction along the turned-up portion 6b of the carcass ply 6A, and an inner standing portion 17C which is connected to the base portion 17A and extends from a bead toe Bt on the tire inner side outwardly in the tire radial direction.

Each chafer rubber 17 is composed of a steel cord ply in which steel cords are arranged, for example, at an angle of 15° to 60° with respect to the tire circumferential direction, reinforces each bead portion 4 together with each bead apex rubber 8, and improves the durability of each bead portion 4 and the handling stability.

Each clinch rubber 10 according to the present embodiment extends outward of the outer standing portion 17B and the carcass ply 6A in the tire axial direction and in an elongated shape, and is exposed as an outer surface of the tire at least in a flange contact range where the tire is in contact with a rim flange (not shown).

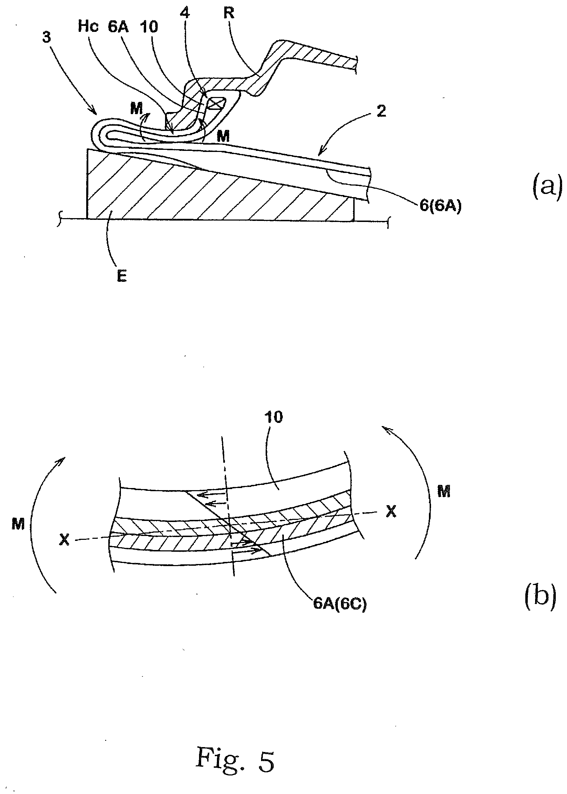

In the present embodiment, the thickness dc of each clinch rubber 10 at a location which is at a height Hc of 25 mm from a bead base line BL outwardly in the tire radial direction needs to be set at 3.0 to 5.0 mm. In other words, for example, when a vehicle runs on a curbstone E as shown in FIG. 5(a), the rubber of the bead portion 4 is sandwiched between a rim R and the curbstone E at the location which is at the height Hc. Then, bending deformation M is applied to the carcass cords 6c of the carcass ply 6A at the location which is at the height Hc. Here, since the rubber thickness dc of the clinch rubber 10 at the location which is at the height Hc is set small, namely, at 3.0 to 5.0 mm, the carcass cords 6c near the location which is at the height Hc is located at the neutral axis X-X of the bending deformation M as shown in FIG. 5(b), and tensile stress applied to the carcass cords 6c is decreased. Therefore, the pinch cut resistance of the carcass cords 6c is improved. It should be noted that if the thickness dc of each clinch rubber 10 at the location which is at the height Hc is less than 3.0 mm, the rigidity of each bead portion 4 is excessively decreased, and the handling stability is deteriorated. In addition, if the thickness dc of each clinch rubber 10 at the location which is at the height Hc exceeds 5.0 mm, the carcass cords 6c at each bead portion 4 are located at positions away from the neutral axis X-X of the bending deformation M. Thus, the tensile stress applied to the carcass cords 6c is increased, and the carcass cords 6c are fractured. Therefore, the thickness dc of each clinch rubber 10 at the location which is at the height Hc is preferably not less than 3.5 mm and preferably not greater than 4.5 mm. Moreover, the weight of the tire whose thickness is defined as described above is low. It should be noted that the thickness of each clinch rubber 10 at the location which is at the height Hc is a length in a normal direction of the chafer rubber 17 in the case where the chafer rubber 17 is disposed at the location which is at the height Hc, and is a length in a normal direction of the carcass ply 6A in the case where the chafer rubber 17 is not disposed at the location which is at the height Hc.

A rubber hardness of each of such clinch rubbers 10 is preferably set so as to be the same as the rubber hardness of each bead apex rubber 8. By so doing, wear or damage due to contact with a rim is prevented while the rigidity of each bead portion 4 is kept high. It should be noted that in the present specification, as a matter of course, a case where the rubber hardness of each clinch rubber 10 is exactly the same as the rubber hardness of each bead apex rubber 8 is included, but also a case where a difference between these rubber hardnesses is equal to or less than 7° is included.

Although the pneumatic tire according to the present invention has been described in detail above, it is needless to say that the present invention is not limited to the specific embodiment described above and various modifications can be made to practice the present invention.

### EXAMPLES

Experimental pneumatic tires with a size of 195/65R15 having the basic structure of the tire shown in FIG. 1 were produced on the basis of specifications in Table 1, and pinch cut resistance, handling stability, and tire weight were tested for each experimental pneumatic tire. It should be noted that the main common specifications are as follows.
Ground-contact width TW: 142 mm
Width W1 of first belt ply / TW: 103%
Width W2 of second belt ply / TW: 95%
Carcass cords
   Cord material: polyester
   Cord interval: 0.08 mm
   Cord diameter: 0.54 mm
   Cord angle θ1: 90°
Belt cords
   Cord material: steel
   Cord interval: 0.13 mm
   Cord diameter: 0.54 mm
   Cord angle 02: 24°
Buttress reinforcing layers
   Cord material: Kevlar (registered trademark)
   Cord diameter: 0.5 mm
Minimum thickness dm of rubber of buttress portion: 4.0 mm
Rubber hardness of clinch rubber: 70°
The test methods are as follows.

### <Pinch Cut Resistance>

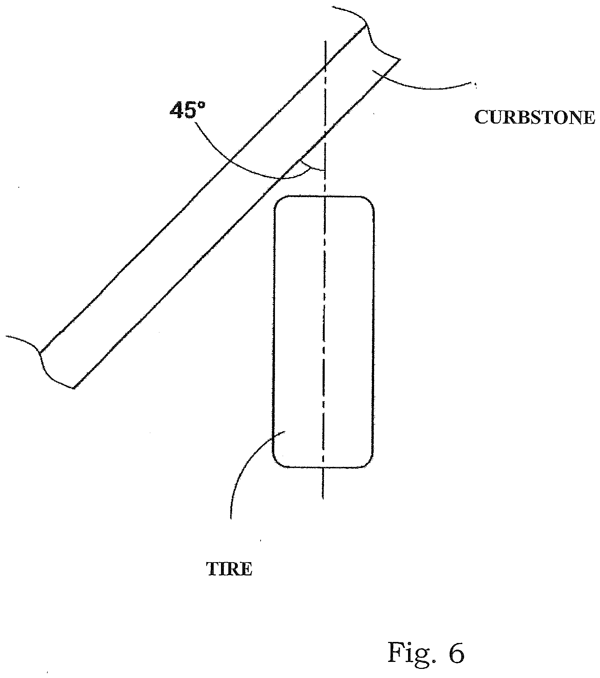

Each experimental tire was mounted to a front wheel of a front wheel drive vehicle produced in Japan with a displacement of 2000 cm³, under the following conditions. As shown in FIG. 6, the experimental tire was caused to approach and run on a curbstone at an angle of 45° with respect to the curbstone and at a speed of 5 km/h. Each of the height and the width of the curbstone was 110 mm. After running on the curbstone, presence/absence of a pinch cut (confirmed by presence/absence of a bubble-like swell in the sidewall portion) was checked. Then, such a test was conducted while the approach speed was increased in increments of 5 km/h, until a pinch cut occurred. The result is indicated as an index based on the approach speed in a conventional example regarded as 100. The higher the value is, the more excellent the pinch cut resistance is.
Rim: 15 × 6 J
Internal pressure: 230 kPa

### <Handling Stability>

Four experimental tires were mounted to the above vehicle, one driver drove the vehicle on a dry asphalt road surface in a test course, and handling stability regarding handling responsiveness, rigid impression, and the like was evaluated organoleptically by the driver. The result is indicated as an index based on the result in the conventional example regarded as 100. The higher the value is, the more favorable the result is.

### <Tire Weight>

The weight of each tire was measured. The result is indicated as an index based on the inverse of the weight in the conventional example regarded as 100. The higher the value is, the more favorable the result is.

The results of the tests are shown in Table 1.

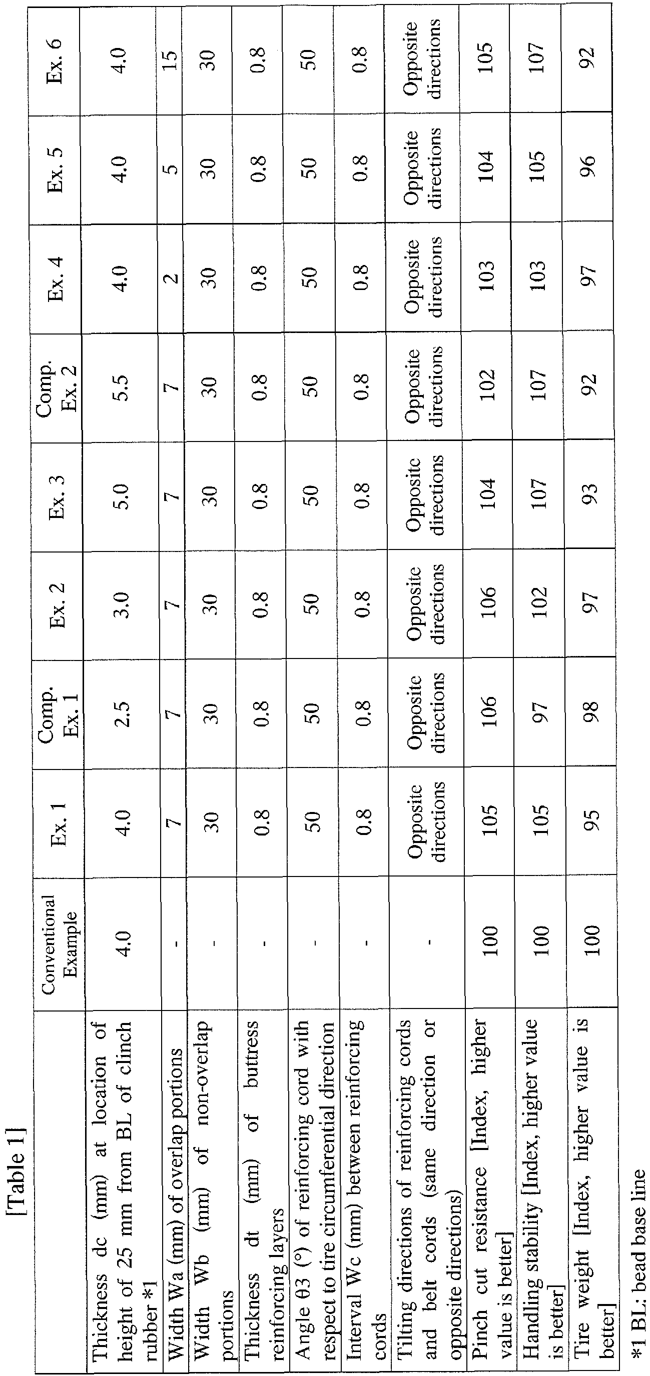

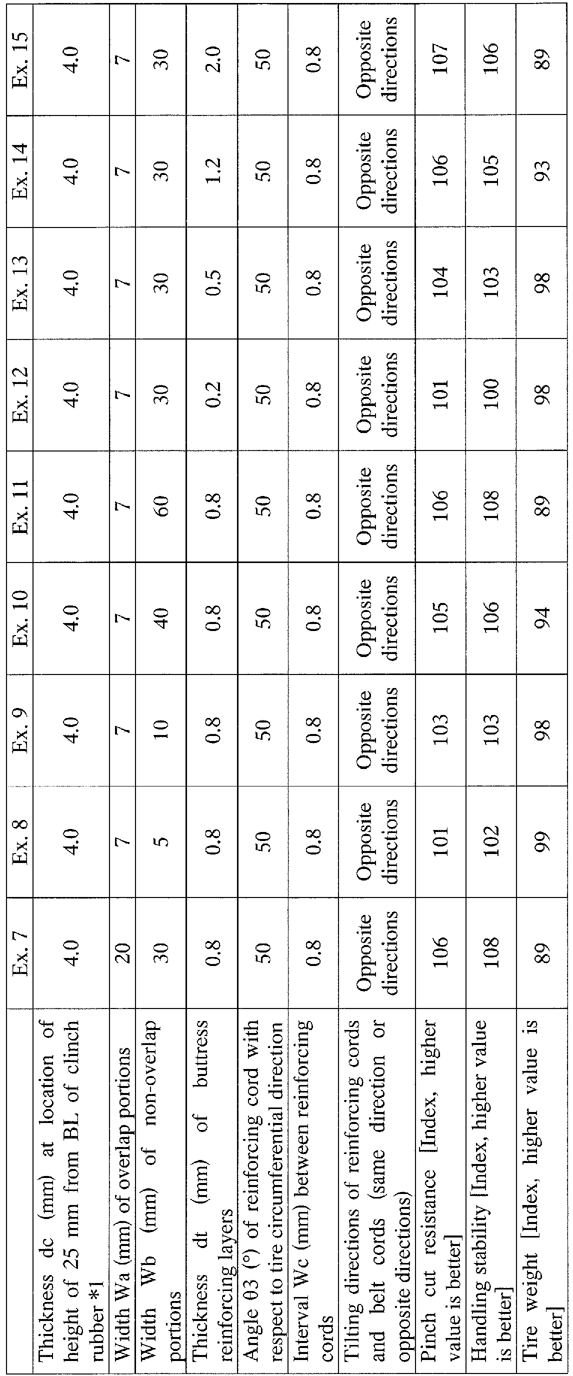

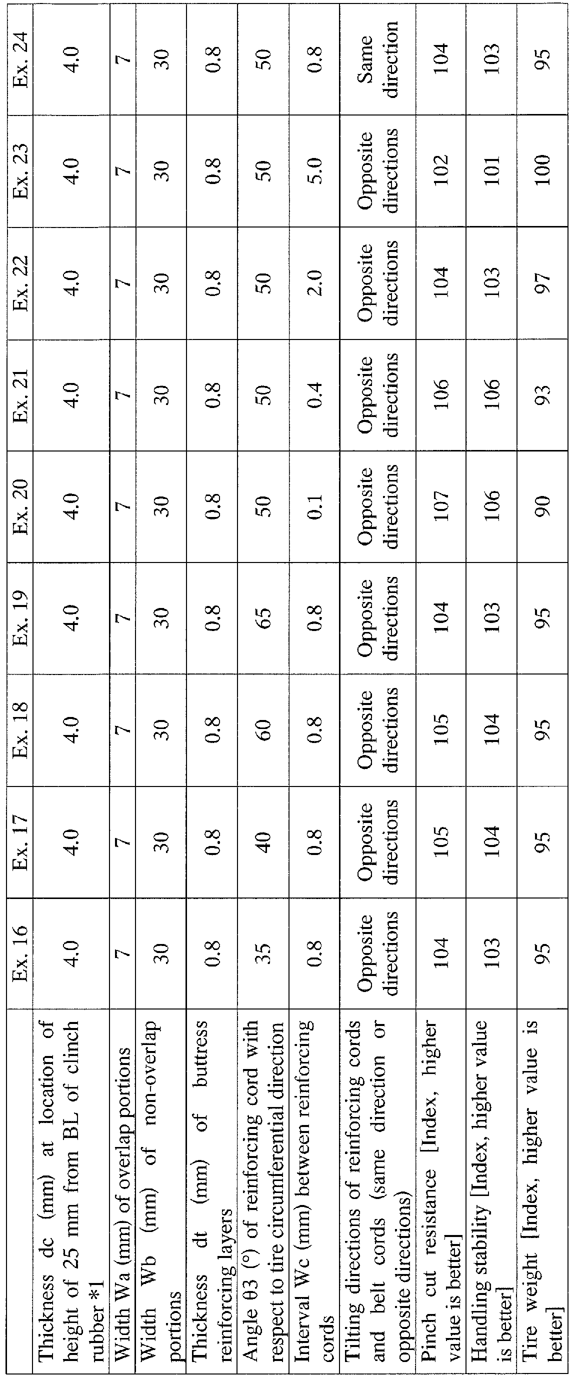

As a result of the tests, for each tire of each Example, it can be confirmed that each performance is improved in a balanced manner as compared to the Comparative Examples. In addition, when the shapes of the buttress reinforcing layers and the rubber hardnesses of the clinch rubbers were changed within the above-described ranges and tests were conducted, the same tendency as this result of the tests was indicated.

## Claims

1. A pneumatic tire comprising: a carcass (6) extending from a tread portion (2) through sidewall portions (3) to bead cores (5) in bead portions (4); a belt layer (7) disposed outward of the carcass (6) in a tire radial direction and inward of the tread portion (2); and clinch rubbers (10) disposed in the bead portions (4) and outward of the carcass (6) in a tire axial direction and forming outer surfaces of the bead portions (4), wherein
the belt layer (7) is composed of a plurality of belt plies (7A, 7B) having belt cords (7a, 7b) tilted at an angle of 15° to 45° with respect to a tire equator (C),
at respective buttress portions (B) on both sides, a pair of buttress reinforcing layers (12) are disposed between the carcass (6) and the belt layer (7),
wherein the pair of buttress reinforcing layers (12) have reinforcing cords (12c) tilted in a direction opposite to that of a belt cord (7a) of an innermost belt ply (7A), **characterized in that** a thickness (dc) of each clinch rubber (10) at a location which is at a height (Hc) of 25 mm from a bead base line (BL) outwardly in the tire radial direction is 3 to 5 mm and a cord interval (Wc) between each reinforcing cord (12c) is not less than 0.4 mm and not greater than 2.0 mm.

2. The pneumatic tire according to claim 1, wherein the reinforcing cords (12c) of the buttress reinforcing layers (12) are tilted at an angle of 40° to 60°with respect to a tire circumferential direction.

3. The pneumatic tire according to any one of claims 1 or 2, wherein
bead apex rubbers (8) having a substantially triangular cross-sectional shape are provided so as to extend from the bead cores (5) outwardly in the tire radial direction, and
a rubber hardness of each clinch rubber (10) is the same as a rubber hardness of each bead apex rubber (8).

## Patentansprüche

1. Luftreifen, umfassend: eine Karkasse (6), die sich von einem Laufflächenabschnitt (2) über Seitenwandabschnitte (3) bis zu Wulstkernen (5) in Wulstabschnitten (4) erstreckt; eine Gürtelschicht (7), die in einer radialen Richtung des Reifens außerhalb der Karkasse (6) und innerhalb des Laufflächenabschnitts (2) angeordnet ist; und Umklammerungsgummis (10), die in den Wulstabschnitten (4) und in einer axialen Richtung des Reifens außerhalb der Karkasse (6) angeordnet sind und Außenflächen der Wulstabschnitte (4) bilden,
wobei die Gürtelschicht (7) aus mehreren Gürtellagen (7A, 7B) mit Gürtelkorden (7a, 7b) zusammengesetzt ist, die bezogen auf einen Reifenäquator (C) um einen Winkel von 15° bis 45° geneigt sind,
wobei in jeweiligen Stützabschnitten (B) auf beiden Seiten ein Paar Stützverstärkungslagen (12) zwischen der Karkasse (6) und der Gürtellage (7) angeordnet ist,
wobei das Paar Stützverstärkungslagen (12) Verstärkungskorde (12c) aufweist, die in einer Richtung entgegengesetzt zu derjenigen eines Gürtelkordes (7a) einer innersten Gürtellage (7A) geneigt sind,
**dadurch gekennzeichnet, dass**
eine Dicke (dc) jedes Umklammerungsgummis (10) an einer Position, die sich bezogen auf eine Wulstbasislinie (BL) in der radialen Richtung des Reifens nach außen bei einer Höhe (Hc) von 25 mm befindet, 3 bis 5 mm beträgt und ein Kordintervall (Wc) zwischen jedem Verstärkungskord (12c) nicht kleiner als 0,4 mm und nicht größer als 2,0 mm ist.

2. Luftreifen nach Anspruch 1,
wobei die Verstärkungskorde (12c) der Stützverstärkungslagen (12) bezogen auf eine Umfangsrichtung des Reifens um einen Winkel von 40° bis 60° geneigt sind.

3. Luftreifen nach Anspruch 1 oder 2, wobei
Wulstapexgummis (8), die eine im Wesentlichen dreieckige Querschnittsform aufweisen, derart vorgesehen sind, dass sie sich von den Wulstkernen (5) in der radialen Richtung des Reifens nach außen erstrecken, und
eine Gummihärte jedes Umklammerungsgummis (10) die gleiche wie eine Gummihärte jedes Wulstapexgummis (8) ist.

## Revendications

1. Bandage pneumatique comprenant : une carcasse (6) s'étendant depuis une portion formant bande de roulement (2) en traversant des portions formant parois latérales (3) jusqu'à des âmes de talons (5) dans des portions de talons (4) ; une couche de ceinture (7) disposée à l'extérieur de la carcasse (6) dans une direction radiale du pneumatique et vers l'intérieur de la portion formant bande de roulement (2) ; et des caoutchoucs de clinchage (10) disposés dans les portions de talons (4) et à l'extérieur de la carcasse (6) dans une direction axiale du pneumatique et formant des surfaces extérieures des portions de talons (4), dans lequel
la couche de ceinture (7) est composée d'une pluralité de nappes de ceinture (7A, 7B) ayant des câblés de ceinture (7a, 7b) inclinés sous un angle de 15° et 45° par rapport à un équateur de pneumatique (C),
au niveau de portions d'épaulement (B) sur les deux côtés, une paire de couches de renforcement d'épaulement (12) sont disposées entre la carcasse (6) et la couche de ceinture (7),
dans lequel la paire de couches de renforcement d'épaulement (12) ont des câblés de renforcement (12c) inclinés dans une direction opposée à celle d'un câblé de ceinture (7a) d'une nappe de ceinture tout à fait intérieure (7A),
**caractérisé en ce qu'**une épaisseur (dc) de chaque caoutchouc de clinchage (10) à un emplacement qui est à une hauteur (Hc) de 25 mm depuis une ligne de base de talon (BL) vers l'extérieur dans la direction radiale du pneumatique est de 3 à 5 mm, et un intervalle des câblés (Wc) entre chaque câblé de renforcement (12c) n'est pas inférieur à 0,4 mm et n'est pas supérieur à 2,0 mm.

2. Bandage pneumatique selon la revendication 1, dans lequel les câblés de renforcement (12c) des couches de renforcement d'épaulement (12) sont inclinés sous un angle de 40° à 60° par rapport à une direction circonférentielle du pneumatique.

3. Bandage pneumatique selon l'une quelconque des revendications 1 ou 2, dans lequel
des caoutchoucs de coiffe de talons (8) ayant une forme de section transversale sensiblement triangulaire sont prévus de manière à s'étendre depuis les âmes de talons (5) vers l'extérieur dans la direction radiale du pneumatique, et
une dureté du caoutchouc de chaque caoutchouc de clinchage (10) est la même qu'une dureté du caoutchouc de chaque caoutchouc de coiffe de talon (8).
